# EUROPEAN PATENT APPLICATION

(11) **EP 0 689 046 A1**
(43) Date of publication of application: **27.12.1995**
(21) Application number: 94830309.4
(22) Date of filing: 23.06.1994
(51) Int. Cl.: G01N 21/89, G01N 21/88, D06H 3/08

(54) **Method and device for monitoring weaving defects, in line, by means of the Fourier optical transform**

(71) Applicant: ISTITUTO NAZIONALE DI OTTICA, I-50125 Arcetri Firenze (IT); CEO CENTRO di ECCELLENZA OPTRONICA, I-50013 Campi Bisenzio (Firenze) (IT); LANIFICIO LUIGI BOTTO S.p.A., I-13068 Vallemosso (Vicenza) (IT); MANUFACTURAS ANTONIO GASSOL S.A., E-08015 Barcelona (ES); S.A. de PLACENCIA de LAS ARMAS SAPA, E-20140 Andoain (Guipuzcoa) (ES)
(72) Inventor: Castellini, Carlo, I-50131 Firenze (IT); Francini, Franco, I-50124 Firenze (IT); Tiribilli, Bruno, I-50143 Firenze (IT); Longobardi, Giuseppe, I-50125 Firenze (IT); Sansoni, Paola, I-50132 Firenze (IT)
(74) Representative: Mannucci, Gianfranco, Dott.-Ing.

(57) **Abstract**

A method is proposed for monitoring weaving defects in a fabric by means of the Fourier optical transform of said fabric, comprising the phases of:
a) advancing the fabric (T) which is being monitored in front of a source of coherent light (1),
b) from said source of coherent light (1) directing a collimated beam (FC) onto said fabric (T),
c) detecting the image of the Fourier optical transform of the fabric, which image is represented by the diffracted image of the grating constituted by said fabric, and
d) detecting any defect of the fabric by the Fourier optical transform.

The Fourier transform is constituted, in the absence of defects, by a two-dimensional geometric distribution of peaks of luminous energy separated from one another by dark zones, and the defects of the fabric (T) are detected by means of the energy dispersed between said peaks.

## Description

The present invention relates to a method for monitoring weaving defects by means of the Fourier optical transform, according to the preamble of Claim 1, and to a device for carrying out said method, according to the preamble of Claim 14.

It is known that passing a collimated beam of coherent light through a grating gives rise to a diffracted image, or so-called Fraunhoffer image, which represents the Fourier optical transform of the grating. This image exhibits a series of peaks relating to the fundamental spatial frequencies and to their harmonics. This diffraction phenomenon also takes place upon directing a collimated beam emitted by a source of appropriate form of coherent light at a fabric, in that the fabric free from defects can be considered to be a two-dimensional grating of constant interval. The Fourier optical transform has the advantage of exhibiting certain properties and symmetries which permit the use thereof in the monitoring of a regular structure such as a fabric. In particular, of fundamental importance is the fact that the Fourier optical transform does not modify its image and remains spatially fixed as the fabric slides in front of the optical system which observes it.

In GB-A-1,332,687 there are described a method `and a device for monitoring a periodic structure, such as for example a fabric, which make use of the Fraunhoffer diffracted images. More specifically, the method described in this publication provides for the phases of:
a) advancing the fabric which is being monitored in front of a source of coherent light;
b) from said source of coherent light, directing a collimated beam at said fabric;
c) detecting the diffracted image of the fabric;
d) detecting any deformation of the fabric by means of said diffracted image.

In GB-A-1,332,687 use is made of a source with a diaphragm in the form of a narrow and long slit aligned with the warp or weft threads. In this mode, what is obtained is a diffracted image composed of a plurality of peaks of luminous intensity in the direction of the weft or warp threads. The peaks are in the form of a slit, just like the source. The diffracted image accordingly exhibits luminous lines which are oriented, according to choice, along the warp or along the weft of the fabric. The purpose of this is to permit the identification of any deviations of the warp (or weft) threads with respect to the reference direction, that is to say any deformations or distortions of the fabric. The revealing of the orientation of the lines takes place by electromechanical means.

This known technology is not applied in the weaving phase, but in a subsequent phase of monitoring of a cloth which has already been removed from the loom. Moreover, this permits the detection only of distortions or deviations of the weft or warp threads, but does not detect other types of defects.

JP-A-4002866 discloses a device for detecting excesses of tension in the weft or warp threads in a fabric after weaving, by means of the Fourier transform of a signal originating from an optoelectronic sensor. The sensor, which is of linear type, detects the image of the fabric. The Fourier transform is a transform of electrical type, i.e. is performed on the signal at the output of the sensor.

The object of the present invention is the realization of a method and of a device of the type abovementioned which permits the detection of defects of the fabric which are not detectable by the known systems. Moreover, an object of the present invention is the realization of a system which permits monitoring on the loom, that is to say in the weaving phase, with the advantage of being able to operate in line, that is to say to repair any defects during the formation of the fabric. This makes it possible to have at the end of the weaving process a manufactured article of very high quality, almost free from defects. In this context, a parameter which is very important for the purpose of processing in line is represented by the response time of the monitoring system.

To achieve this and other objects and advantages, which will be clear to persons skilled in the art upon reading the text which follows, a system has been realized which is based on the Fourier optical transform and on spatial filtering. In substance, the method according to the invention is characterized in that the Fourier optical transform is obtained using a source of coherent light, such that when the fabric is free from defects the luminous peaks of the image of the Fourier transform are well separated from one another by dark zones. In this way, the defects of the fabric-are manifested by the distribution of energy away from the zones of the peaks, i.e. in the dark zones between the latter. These defects can thus be detected by means of the determination of the energy dispersed between the peaks of the diffracted image of the fabric which is being monitored. Preferably, use is made of a light source which is almost a point source and, for example, approximately circular, which generates a beam of appropriate cross section. In this way, the peaks are manifested as luminous zones which are point zones or at least zones of very restricted area, separated from one another by broad dark zones.

The determination or the identification of energy dispersed between the peaks of the image of the Fourier transform obtained can be effected in various ways. By way of example, in terms of concept it is possible to provide for the storage of the image of the Fourier transform relating to a fabric free from defects and then the comparison of this reference image with the regularly acquired image of the fabric which is being monitored. This type of comparison can be effected in various ways. By way of example, there may be provided a first image memory for storing in digital form the reference image and a second image memory in which there is temporarily stored the digitized image obtained by A/D conversion from a CCD television camera or some other matrix sensor which observes the fabric being formed. The difference between the two images is then integrated and this integral is proportional to the energy dispersed.

Conversely, it is possible to imprint on a sheet of suitable material a reference image of the Fourier transform of the fabric free from defects and to use this sheet as a filter (interchangeable) disposed between an optical system for focusing the diffracted image obtained from the fabric which is being monitored and the means for processing the image. What is obtained downstream of the filter thus realized is a difference image, the total intensity of which is proportional to the energy dispersed.

The imprinting of a reference image on a filter has the advantage of being able to have available an ad hoc filter for each single fabric to be monitored, with extremely accurate results. Nevertheless, the realization of filters of this type may prove to be complex and costly. They bay be replaced by one or more fixed filters having a geometry composed of transparent and opaque zones which are suitably distributed and which are associated with one or more broad-area photodetectors. The geometry of the filter is such as to permit the derivation, from the image of the Fourier transform, of the required information.

Particularly accurate results using a low cost and very reliable technology have been obtained by using a matrix sensor, especially for example a CCD television camera, associated with a pulsed coherent light source. The successive images detected by said television camera are subjected to digitization and processing in order to derive information correlated with the energy dispersed between the peaks of the diffracted image. This technique avoids the need for storage of a reference image and comparison thereof with the diffracted image detected on the fabric which is being monitored, and consequently reduces both the expenditure on equipment and also the expenditure on computation.

Further advantageous embodiments of the method according to the invention and of the device for carrying out said method are indicated in the appended claims.

The invention will be better understood on following the description and the accompanying drawing, which shows a non-limiting practical embodiment of said invention. In the drawing:
Figs. 1a, 1b, 1c, 1d, 1e, 1f show the image of the Fourier transform of three fabrics free from defects (Figs. 1a, 1c, 1e) and with a defect (Figs. 1b, 1d, 1f);
Figs. 2a and 2b show a simplified diagram of a one-dimensional grating without defects (Fig. 2a) and with a defect (Fig. 2b);
Fig. 3 shows the Fourier transforms relating to the one-dimensional gratings of Figs. 2a and 2b;
Fig. 4 shows a block diagram of the device;
Figs. 5 and 6 show two different types of filter which can be used in the device of Fig. 4;
Fig. 7 shows an arrangement of annular photodetectors acting as a filter for the device of Fig. 4;
Fig. 8 shows a block diagram of the means for detecting and processing the image of the transform in the event of the use of a matrix sensor, with dual image memory;
Fig. 9 shows a block diagram of a hardware realization of the means for detecting and processing the images, in which the image of the Fourier transform of the fabric is processed using the binary entropy algorithm; and
Fig. 10 shows the diagrams of the signals in a processing system of the type illustrated in Fig. 9.

Fig. 1a shows the diffracted image (Fraunhoffer image) which is obtained by passing a collimated beam of coherent light originating from a circular source of very small diameter through the fabric, which behaves as a two-dimensional grating of constant interval. The diffracted image represents the Fourier optical transform of the fabric and exhibits a dual series (horizontal and vertical) of luminous peaks relating to the fundamental spatial frequency and to its harmonics.

When the fabric exhibits defects, for example a hole, a double thread in warp or in weft, an absent thread or the like, the image of the Fourier transform is modified, with energy being distributed in the shadows between the peaks.

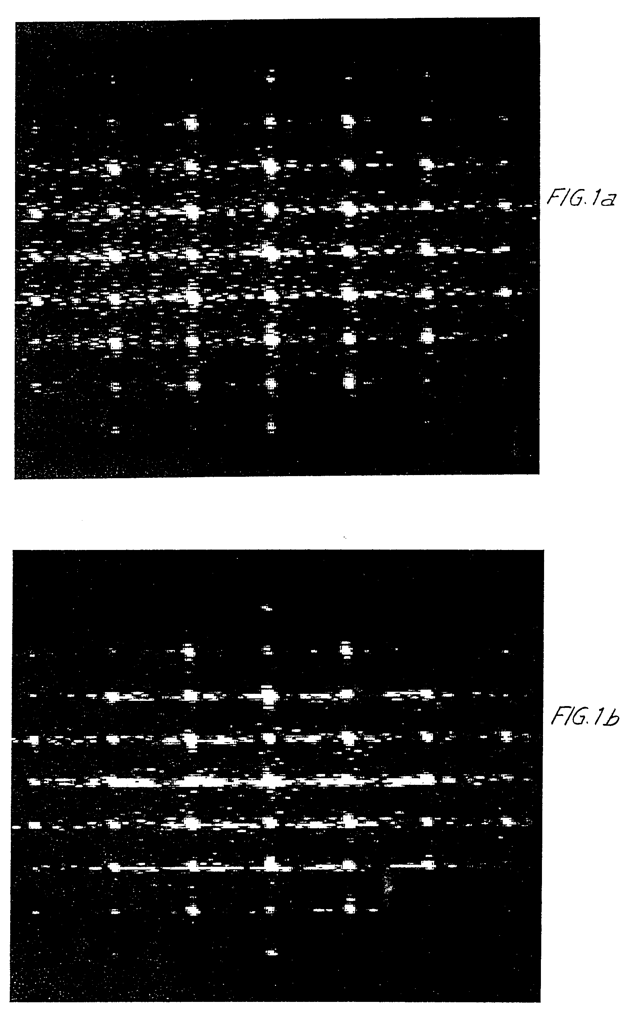

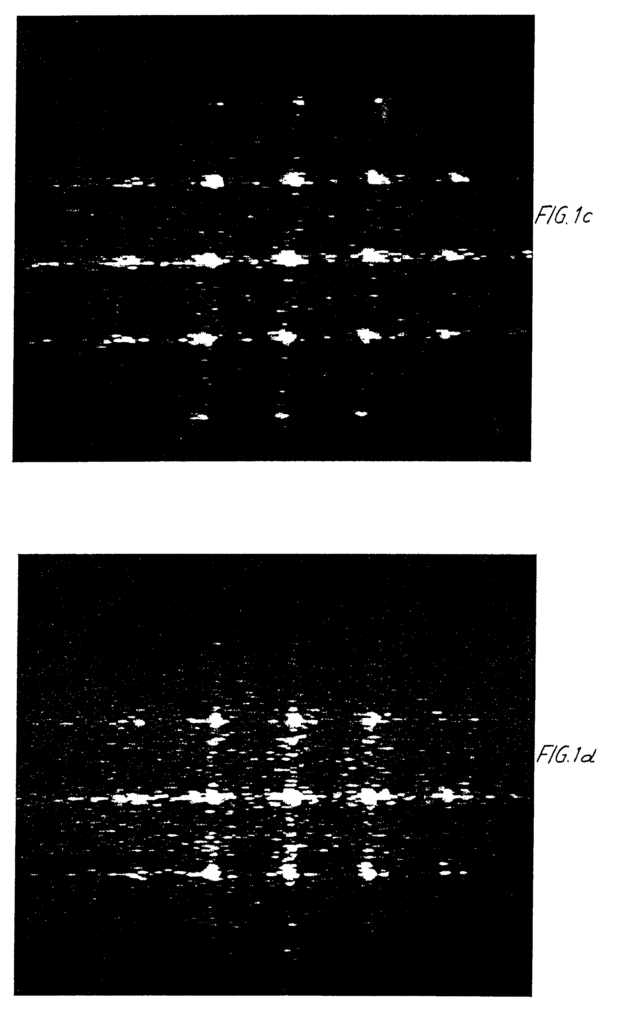

Fig. 1b shows an example of a Fourier transform of the fabric of Fig. 1a, with a defect.

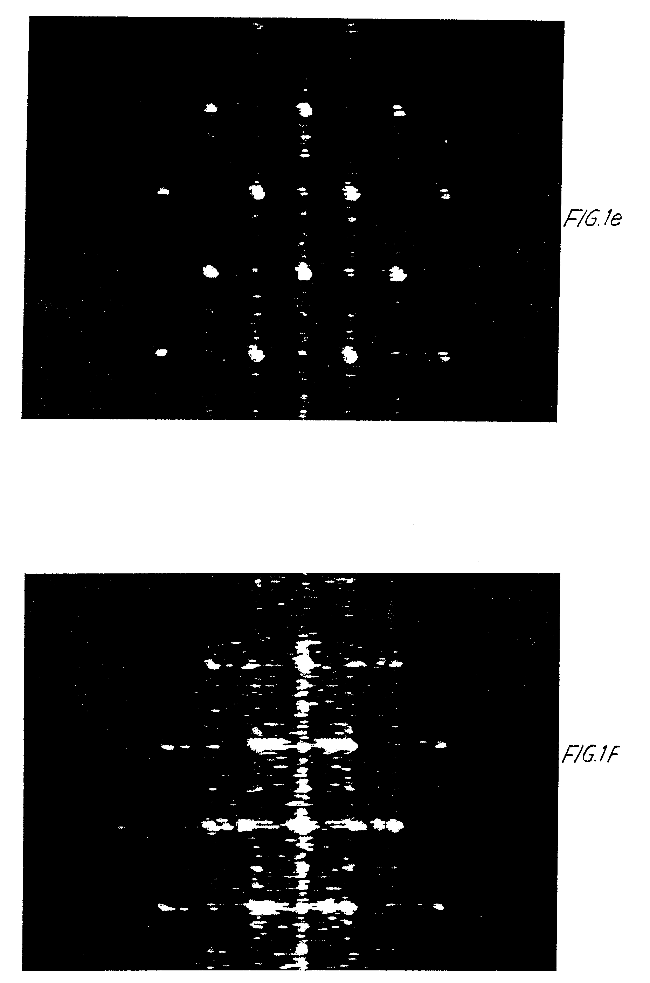

Figs. 1c and 1d show the Fourier transform of a different fabric under conditions of absence of defect (Fig. 1c) and with a defect (Fig. 1d). Similarly, Figs. 1e, 1f show the Fourier transform in the absence of and with a defect, respectively, of a third type of fabric.

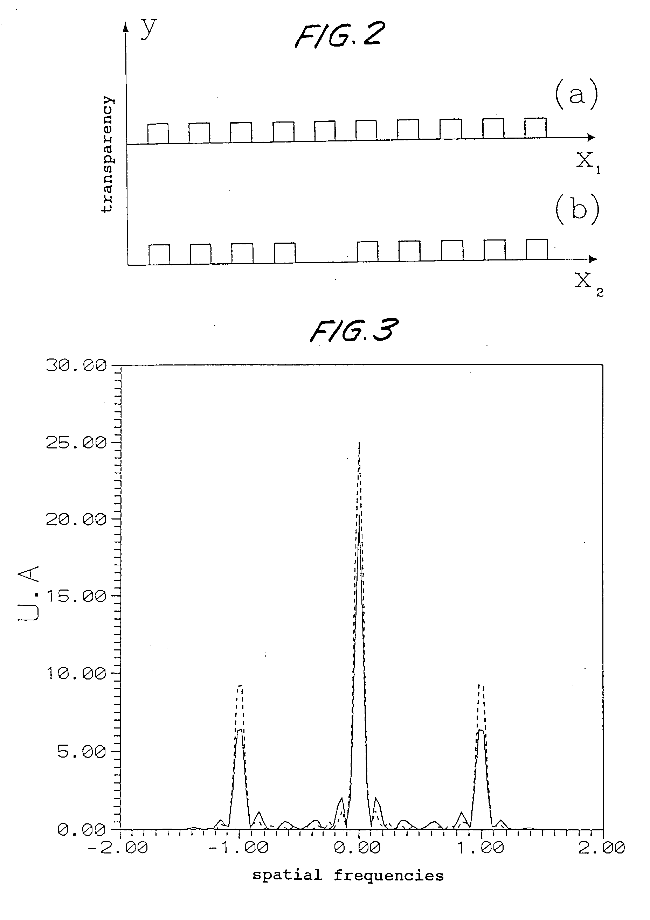

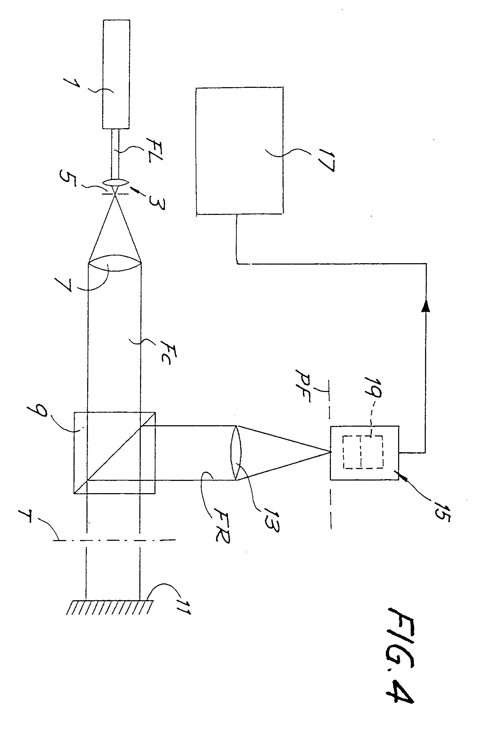

Considering, for the sake of simplicity, the structure of the fabric in a single dimension, what is obtained is a regular grating as in Fig. 2a. The corresponding Fourier optical transform is represented by the broken line curve in Fig. 3. In contrast, Fig. 2b shows the similar one-dimensional grating with an imperfection (the presence of a double thread in the example illustrated). The Fourier optical transform of the grating of Fig. 2b is shown in Fig. 3 in solid lines. It may be noted that in the case of the structure in Fig. 1b there is the emergence of secondary peaks between the order zero and the other orders.

The imperfection of the grating is therefore reproduced in the Fourier optical transform and is manifested as an increase in the intensity of light between the peaks, i.e. in the energy distributed between the peaks, which can be detected by a suitable system of filtering or processing the images.

The considerations set forth above can easily be extended to the real two-dimensional case with reference to either or both of the components, depending upon the orientation of the defect.

Fig. 4 shows a block diagram of the device which produces the Fourier optical transform of the fabric which is being monitored and assesses the variations of said transform where a defect is present. The numeral 1 denotes as a whole a luminous source of coherent light, typically a laser source. The beam FL emitted by the laser is broadened in an optical broadening system 3, optionally comprising a diagram 5 with a circular aperture of small diameter (for example 20 micrometres) and is subsequently collimated onto the fabric T by means of an optical collimating system 7. The collimated beam FC passes through a beam splitter 9 and reaches the fabric T. The light which passes through the fabric T is reflected by a mirror 11 which in the diagrammatic representation of Fig. 4 is illustrated at a certain distance from the fabric T, but which in reality is preferably in contact with the latter. The beam reflected by the mirror 11 is directed by the beam splitter 9 to an optical focusing system 13, in the focal plane PF of which there is generated the image of the Fourier optical transform of the fabric.

The image of the focal plane PF is detected and processed by detecting and processing means, which are diagrammatically indicated by 15, and which can be realized according to various techniques, some of which will be described on an illustrative basis hereinbelow. The details are passed to a monitoring system 17.

The dimension of the area investigated by each sensor has a diameter of the order of one centimetre. The device may comprise an array of fixed parallel sensors extending over the entire width of the fabric, each sensor exhibiting a very small dimension, with the same configuration as described here with reference to a single sensor. As an alternative to the array of fixed sensors, it is possible to use one or more movable sensors, each one of which examines a fabric portion. These sensors may be mounted on a transverse support which is movable with alternating movement in a direction parallel to the weft threads.

According to a first technique of detection and processing, for the detection of the light between the peaks of the Fourier transform it is useful to filter the image of the Fourier transform, removing the main peaks, in such a manner as to evidence the spatial intermediate values, which carry the information to be used. This filtering requires in general a filter which is adaptable for the different transforms: relating to the different types of fabrics depending upon the interval and the dimension of the threads.

The filter should be universal (or at least usable for a certain number of fabrics of similar characteristics). In conceptual terms, this involves either having a fixed filter which functions independently of the type of fabric or realizing a filter which is adaptable to each fabric.

According to a first embodiment, the filter can be fixed and exhibit a geometry composed of transparent and opaque zones. The opaque zones must block out the light of the main peaks of the Fourier transform. Each filter must be designed for one type of fabric or for a class of fabrics which are similar to one another. The filters may be realized either by photodetectors with specific geometries or by masks with transparent and opaque zones followed by one or more broad-area photodetectors.

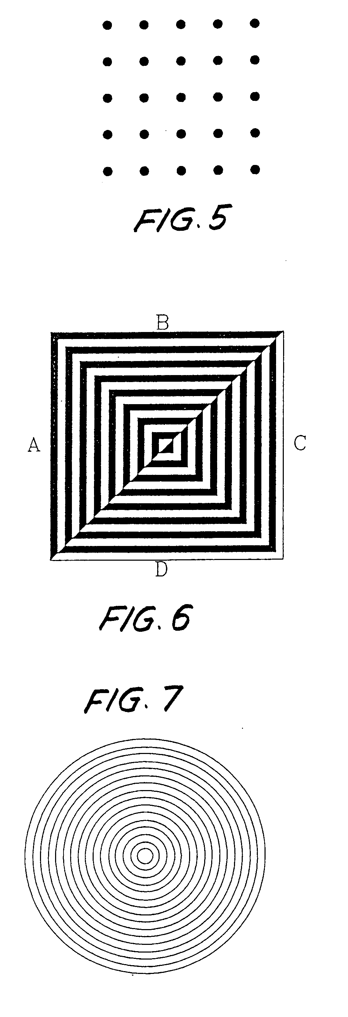

Fig. 5 shows a possible filter pattern which has permitted the satisfactory detection of the defects in the fabric. This is a "dot" filter, i.e. one characterized by a design composed of a two-dimensional geometric distribution of small opaque circles. Each small opaque circle or dot coincides with one of the orders of the Fourier optical transform of the fabric or of the class of fabrics to which the filter relates.

A broad-area detector placed beyond the filter (indicated in broken lines in Fig. 4 and these marked 19) integrates the light relating to the filtered image, which permits the detection of the presence of defects in the fabric. If the fabric is free from defects, and thus the diffracted image is characterized by concentrated peaks separated by dark zones, the "dot" filter obscures the image almost completely and the photodetector detects a minimal incident energy. Where, on the other hand, the fabric exhibits a defect, the light "spreads" between the peaks of the image of the Fourier transform. The energy in the zones between the peaks passes through the "dot" filter and reaches the photodetector, which signals a greater incident energy. Comparison with a predetermined threshold value permits the signalling of the condition of a defect in the fabric.

Fig. 6 shows a filter which will be called hereinbelow a "butterfly" filter which can be used as an alternative to the filter of Fig. 5. This is quadrilateral in shape and is divided into four quadrants A, B, C, D by the two diagonals. Each quadrant is in its turn subdivided into stripes with transparent and opaque bands disposed in alternating fashion. The arrangement of transparent/opaque bands in one quadrant is inverted with respect to that of the opposite quadrant.

The "butterfly" filter makes use of the properties of symmetry of the Fourier transform, according to which a point of the image of the transform has the same intensity as the point which is situated in a position symmetrical with respect to the centre of the image of the transform (peak corresponding to the fundamental spatial frequency). This property is always maintained, even where a defect is present.

To detect the presence of a defect, there is positioned in the Fourier plane a filter with alternate transparent and opaque planes, as in Fig. 6, placing the centre of the filter in correspondence with the zero order. If a peak to the left of the origin falls within the black (opaque) zone, a peak to the right will fall within the corresponding (transparent) white zone.

A detector with four quadrants which is placed behind the "butterfly" filter of Fig. 6 detects the signals on each quadrant A, B, C, D and permits the determination of the ratios between the luminous intensities incident upon the pairs of opposing quadrants.

When the Fourier transform is modified in consequence of the presence of a defect, the ratio between the signals and two opposite quadrants (for example on the quadrants A and C or on the quadrants B and D) changes. For example, if the defect generates an increase of light at a point of the quadrant A where the filter is transparent, the corresponding increase in the quadrant C will fall on an opaque zone of the filter and will not be capable of being observed. This is so by virtue of the maintenance of the symmetry of the transform and the special symmetry of the filter. Consequently, the signal on the quadrant A increases, while the signal on the quadrant C remains unchanged, with a consequent variation of the ratio between the signals. For each type of fabric there exist values of the ratios of signals on the quadrants A/C and B/D corresponding to the absence of defects and a shift from these values indicates the presence of a defect in the fabric area which is being monitored.

This filter is particularly suitable in the case of defects which cause changes of interval in the material and thus also in the transform. It should be noted too that, as the detection system is of differential type, this filter compensates for any fluctuation of the source and avoids false alarms.

Fig. 7 shows a "ring" filter which is realized by using a photodetector 19 composed of a central circle and a predetermined number of concentric rings. The rings and the central circle act as independent photodetectors and the electrical signal can be read on the corresponding output. On positioning the photodetector with the centre on the central peak of the Fourier optical transform, for each element of the photodetector there will be obtained a signal level determined by the position of the peaks of the Fourier optical transform. In the case of fabric free from defects, the light levels on the rings included between the central peak and the first order will be less as compared with the case of defective fabric.

In general, the output levels of the n concentric annular elements will be different in the two cases of complete fabric and defective fabric and the difference will be greater and more readily detectable on some elements (for example only on the innermost rings). To have a single output signal indicative of the defect, it is necessary to summate all the signals of the rings with appropriate weightings and normalizations. On each occasion when there is a change in the type of fabric to be monitored, it will be possible to identify the rings which are most significant and to modify the weightings in consequence.

In the examples of filters illustrated with reference to Figs. 5 to 7, a single adaptable filter is used for at least one class of fabrics. Nevertheless, a filter which can be modified as a function of the type of fabric and thus of the pertinent Fourier transform would be the most versatile and the most effective for the detection of the defects. The realization of a filter with, imprinted thereon, the image of the transform of the fabric without defects, used for the filtering of the image of the Fourier transform of the fabric during production, permits an improvement in the detection of defects, calibrating the detection process for each type of fabric.

Studies have recently been carried out on methods of writing the image (in positive or in negative with respect to the remainder of the filter) on a suitable support, which are realized for example using liquid crystal polymers (LCPs) or photochromic products. The photochromic compounds vary their properties of transmittance and of colour in dependence on exposure to optical radiation. Typically, the activation wavelengths are UV, but by means of compounds which absorb in the visible it is possible to transfer the excitation to the photochromic molecules, which can then be activated by visible light (green or yellow).

Photochromism is very useful for imprinting an image of the Fourier transform onto a plate of transparent material. To this end, there have been identified three classes of photochromic molecules which are of interest regarding application to the method forming the subject of the present invention: spiropirans, spiroxazines and fulgides. The compounds of the first two groups have the characteristic of being stable only in the nonactivated state, as a result of which the photochromism which changes the colour of the compound is thermally deactivated (causing the specimen to revert to the initial colour) in a few minutes. In contrast, the fulgides exhibit two stable states (with two different colours or transmittance values), transitions corresponding to which are obtained with two wavelengths, UV and visible respectively.

Using a photosensitive compound of this type, it is possible to realize a filter which is installed on the loom between the stirrup and the sensor. At the start of each production cycle, on the previously erased or unused filter there is imprinted the image of the transform of the fabric to be made, free from defects. This can be achieved by using the first segment of fabric produced by the loom and visually monitored. After completion of the production of the fabric, the filter can again be erased or replaced by an unused one.

This operational procedure can be implemented with the above recited compounds or with other equivalent ones provided they do not require development by chemical means, in a manner such that the imprinting of the image can take place when the filter has already been installed in its position of use, in order to avoid problems of positioning.

A further alternative for the detection and the processing of the image of the Fourier optical transform of the fabric consists in using a matrix sensor, for example a CCD television camera, and in comparing the image of the Fourier transform of the fabric with a reference signal or with a reference image stored at the start of the weaving process, in the absence of defects.

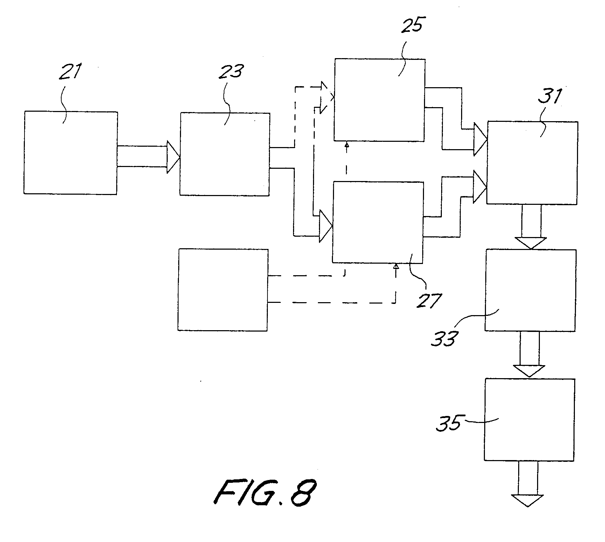

Fig. 8 shows a block diagram of a hardware realization of a detection and processing system which uses a CCD array to detect the image of the Fourier transform, which is then processed digitally. 21 indicates the matrix sensor, the analog output signal of which is converted into a digital signal by the 8 bit A/D converter, generally indicated by 23. 25 and 27 indicate two image memories in which there are stored respectively a reference image, relating to the fabric free from defects, and the image which is acquired in real time by the sensor. Downstream of the memories 25 and 27 there is disposed an arithematic logic unit 31 for the computation of the integral of the difference of the two images stored in 25 and 27 respectively. 33 indicates a summator, which forms the integral of the difference, and 35 indicates a digital/analog converter.

In substance, the system of Figure 8 is used to form a difference between images which are digitized and stored in 27 and 29 and subsequently an integral over the difference image, which corresponds, in conceptual terms, to a filtering of the image of the Fourier transform of the fabric which is being monitored with a filter on which there is imprinted the image of the Fourier transform of the same fabric free from defects.

For the purpose of guaranteeing spatial coincidence between the stored image and that acquired, the difference method here described with reference to Fig.8 requires a transverse stability of the optical head, and for this reason it is important to isolate the optical system from the vibrations of the loom on which the device is mounted.

The method according to the present invention can be realized also by operating with an algorithm which requires the processing of a single image. In this case, it is possible to use a pulsed laser to freeze the image, so that the system becomes insensitive to the vibrations.

A type of algorithm which is particularly effective, here defined as "Binary Entropy", is given by: 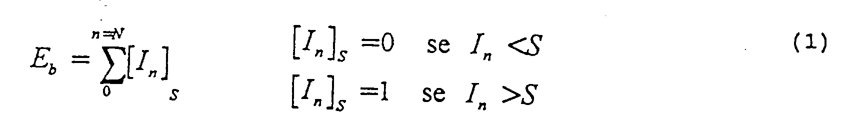
where Iₙ is the luminous intensity measured on the nth pixel, N is the total number of pixels in a frame, and S represents a threshold value to be defined as a function of the type of fabric and of the sensitivity which it is desired to obtain.

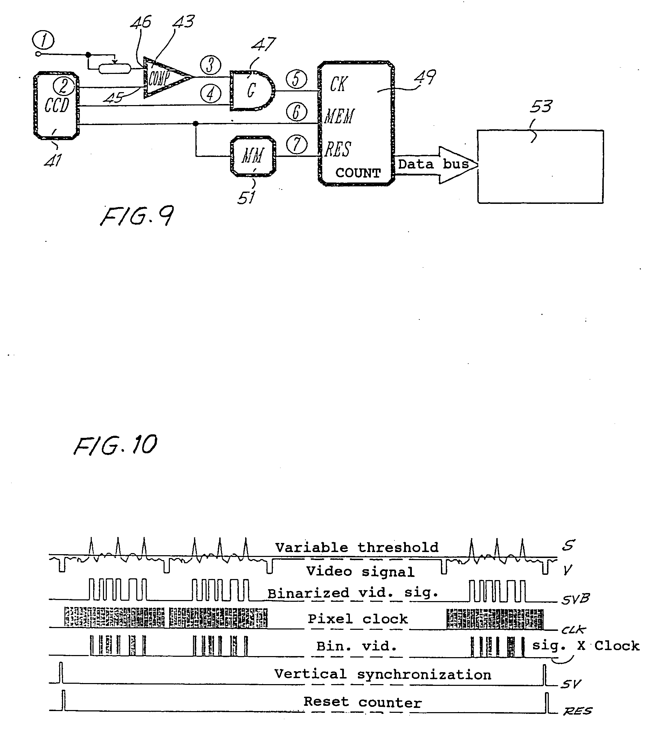

A possible practical realization of a hardware system which realizes the expression of Eb is represented in the block diagram of Fig. 9. 41 indicates the matrix sensor, typically a CCD television camera. 43 indicates a comparator at the inputs 45, 46 of which there are present the video signal V originating from the television camera 41 and a threshold signal S, which is adjustable as a function of the sensitivity which it is desired to obtain. Downstream of the comparator there is disposed a logic gate 47 which carries out an operation of "AND" type between the clock signal corresponding to each pixel of the television camera 41 and the signal at the output of the comparator 43. The output of the logic gate 47 is passed to a counter 49, with which there is further associated a logic memory 51. The output of the counter 49 is passed to monitoring means 53 which may possibly be interfaced with the loom.

Fig. 10 contains graphical indications of the signals present in the various points of the system of Fig. 9. The first two diagrams indicate respectively the threshold signal S and the analogue video signal V originating from the television camera 41. These two signals are passed to the comparator 43, at the output of which the binarized video signal SVB is present, indicated in the third diagram from the top. The levels of the signal V which exceed the threshold S assume the value "1", while those which do not exceed this threshold assume value "0". The binarized video signal SVB is passed to the first input of the AND gate 47, at the second input of which there is present the clock signal CLK of the television camera 41. The logic gate 47 carries out an operation of AND type between the clock signal CLK corresponding to each pixel of the television camera 41 and the binarized video signal SVB at the output of the comparator 43. The result of the operation is indicated in the fifth diagram of Fig. 10 (SVBxCLK).

The counter 49 counts the number of Pulses originating from those pixels of the television camera 41, the illumination level of which is greater than a certain predetermined value defined by the adjustable threshold S. The counter 49 is activated by the vertical synchronization signal SV of the television camera 41 and by the logic memory 51, which resets the counter 49 after a frame time (signal RES).

As the fabric is fed through, individual successive images of the fabric are periodically taken and frozen by means of the pulsed laser and the television camera 41, each of which images is processed in the circuit of Fig. 9. If the fabric is free from defects, the number n₀ of pixels with an illumination value greater than the value defined by the threshold S is markedly less than the number n of pixels above threshold in the case of defective fabric. On all occasions when the difference n-n₀ exceeds a certain specified level, the system signals the presence of a defect. All the operations described above can also be carried out by means of a digital electronic system.

The use of a single image and the application to this of an algorithm which is capable of identifying the presence of energy dispersed about the peaks of the Fourier transform is particularly beneficial as compared with the use of systems which carry out a comparison of two images, since there is a reduction of the computing effort and, moreover, the system is made insensitive to vibrations, which is particularly advantageous where it is necessary to carry out the monitoring directly on the loom, in the weaving phase.

Binary Entropy is only one of the possible algorithms which can be used for this purpose. Other algorithms which permit the utilization of a single image are, by way of example, the following:
c1) integral of the histogram between two thresholds,
c2) integral of the difference between two images,
c3) statistical parameters: summation, mean, skewness, kurtosis,
c4) entropy and contrast.

In these cases also, a processing of hardware type is possible.

## Claims

1. Method for monitoring weaving defects in a fabric by means of the Fourier optical transform of said fabric, comprising the phases of:
a) advancing the fabric (T) which is being monitored in front of a source of coherent light (1),
b) from said source of coherent light (1) directing a collimated beam (FC) onto said fabric (T),
c) detecting the image of the Fourier optical transform of the fabric, which image is represented by the diffracted image of the grating constituted by said fabric, and
d) detecting any defect of the fabric by the Fourier optical transform,
characterized in that
- said Fourier transform is constituted, in the absence of defects, by a two-dimensional geometric distribution of peaks of luminous energy separated from one another by dark zones,
- and in that the defects of the fabric (T) are detected by means of the energy dispersed between said peaks.

2. Method according to Claim 1, characterized in that said monitoring is carried out on the machine for producing the fabric, during weaving.

3. Method according to Claim 1 or 2, characterized in that the collimated beam (FC) is directed through a beam splitter (9) disposed between the source of coherent light (1) and the fabric (T) which is being monitored, passes through the fabric (T) and is reflected by a mirror (11) disposed on the opposite side of the fabric (T) from said source of coherent light, towards said beam splitter (9) and from the latter towards means for detecting and processing the image of the Fourier optical transform.

4. Method according to one or more of the preceding claims, characterized by: storing a reference image of the Fourier optical transform of a fabric free from defects; subtracting said reference image from the image of the Fourier transform obtained from the fabric which is being monitored, or vice versa; and detecting the possible presence of defects as a function of the energy content of the image obtained by difference.

5. Method according to Claim 4, characterized by: imprinting on a filter the reference image of the Fourier optical transform of the fabric free from defects; and interposing said filter between an optical system (13) for focusing the image of the Fourier optical transform and the means (15, 19) for detecting the image, said detecting means receiving an image constituted by the difference between the image of the Fourier optical transform of the fabric (T) which is being monitored and the reference image of the Fourier optical transfer of the fabric free from defects.

6. Method according to Claim 4, characterized by detecting the image of the Fourier optical transform of the fabric (T) which is being monitored by means of a matrix sensor (21), and comparing said image with a prestored reference image of the Fourier optical transform of the fabric free from defects.

7. Method according to Claim 6, characterized by providing: two digital image memories, one for the image of the Fourier optical transform of the fabric which is being monitored and one for the prestored reference image; subtracting means for determining the difference between said two images; and integrating means (31) for computing the integral of the difference between said two images.

8. Method according to one or more of Claims 1 to 3, characterized by arranging, between an optical system (13) for focusing the image of the Fourier optical transform of the fabric (T) which is being monitored and the means (19) for detecting said image, a filter with a geometry constituted by transparent zones and opaque zones, the distribution of the transparent zones and of the opaque zones being determined as a function of the image of the Fourier optical transform of the fabric free from defects.

9. Method according to Claim 8, characterized in that said filter exhibits opaque zones in the same positions as the peaks of the image of the Fourier optical transform of the fabric free from defects.

10. Method according to Claim 8, characterized in that said filter is a "butterfly" filter.

11. Method according to one or more of Claims 1 to 3, characterized by arranging, between an optical system (13) for focusing the image of the Fourier optical transform of the fabric which is being monitored and the means (19) for detecting said image, a photodetector with independent sectors in the form of concentric rings, and by detecting the presence of any defects of the fabric on the basis of the output signal of at least some of said independent sectors.

12. Method according to one or more of Claims 1 to 3, characterized by detecting the image of the Fourier optical transform of the fabric which is being monitored by means of a matrix sensor (21, 41), and determining the energy dispersed between said peaks by a comparison with a reference signal (S).

13. Method according to Claim 12, characterized by the phases of:
- acquiring an image of the Fourier optical transform of the fabric which is being monitored by means of said matrix sensor (41), said image being composed of a plurality of pixels,
- defining a predetermined threshold value (S) to be compared with the illumination value of each pixel of said image,
- determining the number (n) of pixels of said acquired image, the illumination value of which exceeds said threshold value (S),
- comparing the number (n) of pixels, the illumination value of which exceeds the threshold value (S), with a reference number (n₀).

14. Method according to one or more of the preceding claims, characterized in that said source of coherent light (1) is approximately a point source.

15. Device for monitoring the weaving defects in a fabric by means of the Fourier optical transform, comprising:
- a source of coherent light (1) which generates a collimated beam (FC),
- means (19) for detecting the image of the Fourier optical transform obtained by passage of said collimated beam (FC) through said fabric, and
- means for processing said image of the Fourier optical transform,
characterized
- in that said source of coherent light (1) generates a Fourier optical transform constituted by a two-dimensional geometric distribution of peaks of luminous energy separated from one another by dark zones in the absence of defects,
- and in that said detecting and processing means determine the energy dispersed between said peaks.

16. Device according to Claim 15, characterized by: a beam splitter (9) disposed between the source of coherent light (1) and a reflecting mirror (11), the fabric (T) which is being monitored being caused to pass between said beam splitter and said reflecting mirror; and in that said detecting means (19) and said processing means (15, 17) receive the image reflected by said mirror (11) and by said beam splitter (9).

17. Device according to Claim 15 or 16, characterized by a filter disposed between an optical system (13) for focusing the image of the Fourier optical transform and said detecting and processing means (15, 17, 19).

18. Device according to Claim 17, characterized in that said filter is constituted by a mask exhibiting opaque zones and transparent zones which are geometrically distributed in conformity with the image of the Fourier optical transform, and in that downstream of said mask there are disposed one or more broad-area photodetectors (19).

19. Device according to Claim 18, characterized in that said mask is a "butterfly" filter, or a filter having a plurality of opaque circles which are geometrically disposed according to the distribution of said peaks.

20. Device according to Claim 18, characterized in that said mask is constituted by a support having, a negative form, the image of the Fourier optical transform of the fabric free from defects, said image being capable of being modified for each type of fabric.

21. Device according to Claim 17, characterized in that said filter is constituted by a plurality of restricted-area photodetectors which each detect a portion of the image of the Fourier optical transform focused by said optical focusing system (13).

22. Device according to Claim 21, characterized by a plurality of concentric annular photodetectors.

23. Device according to Claim 15 or 16, characterized in that said detecting means comprise a matrix sensor (21, 41).

24. Device according to Claim 23, characterized in that with said matrix sensor (21) there are associated digitizing means (23) and two image memories (25, 27), the first (25) containing a digitized reference image of the Fourier optical transform of a fabric free from defects, and the second (27) containing at each instant a digitized image of the Fourier optical transform of the fabric which is being monitored, the contents of said two image memories (25, 27) being subtracted and the difference being integrated in order to determine the energy dispersed between said peaks.

25. Device according to Claim 23, characterized in that with said matrix sensor (41) there are associated means (43) for binarizing the detected image and processing means (47, 49, 51, 53) which determine, on the basis of the single image detected by said matrix sensor and of a single prestored datum (n₀), the possible presence of a defect.

26. Device according to Claim 25, characterized in that said means for binarizing and processing the image comprise:
- a comparator (43) which compares the signal (V) originating from the matrix sensor (41) with a threshold (S) and binarizes the signal, assigning the value "1" to the levels which exceed said threshold (S) and the value "0" to the signals which do not exceed said threshold,
- a counter (49) which counts the number (n) of pixels of said detected image, the illumination value of which exceeds said threshold,
- means (53) for comparison between said number (n) of pixels which exceed said threshold and a predetermined number (n0).

27. Device according to one or more of Claims 15 to 26, characterized in that said source of coherent light (1) is an approximately point source.
